# EUROPÄISCHE PATENTANMELDUNG

(11) **EP 4 012 920 A1**
(43) Veröffentlichungstag der Anmeldung: **15.06.2022**
(21) Anmeldenummer: 21213835.8
(22) Anmeldetag: 10.12.2021
(51) Int. Cl.: H02S 20/10, H02S 10/00, H02S 30/00, H02S 40/22

(54) **PHOTOVOLTAIKANLAGE MIT SATTELDACHARTIGER ANORDNUNG DER SOLARMODULE IM FREILAND**

(30) Priorität: 10.12.2020 DE 202020107135 U
(71) Anmelder: Düllmann Umformtechnik GmbH, 59469 Ense (DE)
(72) Erfinder: Düllmann, Ralf, 59823 Arnsberg (DE)
(74) Vertreter: Andrejewski - Honke Patent- und Rechtsanwälte Partnerschaft mbB

(57) **Zusammenfassung**

Eine Photovoltaikanlage (1) zur Errichtung im Freiland umfasst wenigstens eine Verankerung (2) sowie ein erstes Solarmodul (5) und ein zweites Solarmodul (6). Die Solarmodule (5, 6) laufen in einer Vorderansicht jeweils aufsteigend aufeinander zu. Die Photovoltaikanlage (1) umfasst ein erstes Begrenzungselement (9), wobei das erste Solarmodul (5) in einer Vorderansicht dem ersten Begrenzungselement (9) zugeneigt ist. Das erste Begrenzungselement (9) ist so ausgebildet, dass mindestens einige von dem ersten Solarmodul (5) reflektierte Sonnenlichtstrahlen mindestens zeitweise auf das erste Begrenzungselement (9) auftreffen.

## Beschreibung

Die Erfindung betrifft eine Photovoltaikanlage zur Errichtung im Freiland, umfassend wenigstens eine Verankerung zur Befestigung der Photovoltaikanlage im Erdreich, wobei die Verankerung wenigstens ein Ankerelement umfasst, wobei das Ankerelement für ein Eintreiben in das Erdreich ausgebildet ist und eine Länge von wenigstens 20 cm aufweist,

wobei die Photovoltaikanlage ein erstes Solarmodul und ein zweites Solarmodul aufweist, wobei die Solarmodule in einer Vorderansicht jeweils aufsteigend aufeinander zulaufen und dort zwischen sich einen Mittelbereich bilden, wobei der Mittelbereich sich in einer Draufsicht in einer Längsrichtung erstreckt und eine dazu quer verlaufende Querrichtung definiert, wobei die Unterseiten der beiden Solarmodule zwischen sich einen Winkel α einschließen, wobei der Winkel α kleiner ist als 180° und größer ist als 60°, wobei die Photovoltaikanlage wenigstens einen ersten Schenkel aufweist, wobei der erste Schenkel die Verankerung mit dem ersten Solarmodul und/oder dem zweiten Solarmodul verbindet.

Derartige Photovoltaikanlagen sind aus DE 10 2011 007 521 A1 bekannt und umfassen zwei jeweils aufsteigend aufeinander zulaufende Solarmodule. Die Solarmodule nehmen in einer Seitenansicht die Form eines Satteldaches an und umschließen in einer Draufsicht zwischen sich einen als Firstbereich ausgestalteten Mittelbereich. Die Solarmodule werden von Schenkeln getragen, welche jeweils über eine Verankerung im Erdreich fixiert sind. Hierzu weisen die Verankerungen jeweils ein Ankerelement auf, wobei das jeweilige Ankerelement als nach unten spitz zulaufender Pfahl ausgestaltet ist.

Nachteilig an dieser bekannten Photovoltaikanlage ist jedoch, dass diese nicht ohne Weiteres in der Nähe von baulichen Einrichtungen, beispielsweise an Siedlungen und an für Kraftfahrzeuge freigegebenen Verkehrswegen, errichtet werden kann. Denn von den Oberflächen der Solarmodule geht insbesondere bei einer tief stehenden Sonne eine erhebliche Blendungswirkung aus, weil die reflektierten Lichtstrahlen dann nahezu waagerecht verlaufen. Diese Lichtstrahlen führen regelmäßig zu starken Blendungen und mitunter zu Belästigungen im Bereich von Siedlungen und - besonders gravierend - zu Gefahren im Bereich von Verkehrsinfrastruktur wie Straßen oder Flughäfen.

Auch aus diesem Grunde sind im Freiland errichtete Photovoltaikanlagen an Verkehrswegen relativ selten. In diesen wenigen Fällen werden Photovoltaikanlagen wie in DE 10 2010 033 702 A1 oder CN 108809215 A brückenartig oberhalb der Verkehrswege installiert. Alternativ, wie in CN 204928189 U, werden die Solarmodule auf wenigstens 4,5 m hohen Masten neben den Verkehrswegen befestigt. Die naturgemäß sehr aufwendigen Brücken zerstören regelmäßig die Wirtschaftlichkeit der Photovoltaikanlagen. Aber auch die hohen Masten bedürfen einer sehr stabilen und daher sehr kostspieligen Ausgestaltung. Denn aufgrund der Hebelwirkung der großen Mastlänge und der großen, an den Solarmodulen angreifenden Windkräfte bei Stürmen wirken ausgesprochen große Kräfte auf den Mastschaft und die Verankerung ein.

Es ist daher Aufgabe der Erfindung, eine Photovoltaikanlage zu schaffen, welche mit geringem Aufwand auch im Bereich von Siedlungen und Verkehrswegen errichtet werden kann. Insbesondere ist es Aufgabe der Erfindung, die Blendung von Einwohnern und Verkehrsteilnehmern zu verringern, um auf diese Weise oft kaum oder gar nicht genutzte Flächen in der Nähe bzw. am Rande von Siedlungen und Verkehrswegen einer wirtschaftlichen photovoltaischen Nutzung zuzuführen.

Diese Aufgabe wird gelöst durch eine Photovoltaikanlage zur Errichtung im Freiland, umfassend wenigstens eine Verankerung zur Befestigung der Photovoltaikanlage im Erdreich, wobei die Verankerung wenigstens ein Ankerelement umfasst, wobei das Ankerelement für ein Eintreiben in das Erdreich ausgebildet ist und eine Länge von wenigstens 20 cm aufweist,
wobei die Photovoltaikanlage ein erstes Solarmodul und ein zweites Solarmodul aufweist, wobei die Solarmodule in einer Vorderansicht jeweils aufsteigend aufeinander zulaufen und dort zwischen sich einen Mittelbereich bilden, wobei der Mittelbereich sich in einer Draufsicht in einer Längsrichtung erstreckt und eine dazu quer verlaufende Querrichtung definiert, wobei die Unterseiten der beiden Solarmodule zwischen sich einen Winkel α einschließen, wobei der Winkel α kleiner ist als 180° und größer ist als 60°, wobei die Photovoltaikanlage wenigstens einen ersten Schenkel aufweist, wobei der erste Schenkel die Verankerung mit dem ersten Solarmodul und/oder dem zweiten Solarmodul verbindet,
wobei die Photovoltaikanlage ein erstes Begrenzungselement aufweist, wobei das erste Begrenzungselement in der Draufsicht eine Begrenzung der Photovoltaikanlage in wenigstens einer Himmelsrichtung darstellt, wobei in einer Vorderansicht zwischen dem ersten Solarmodul und dem ersten Begrenzungselement keine anderen Solarmodule befindlich sind, wobei das erste Solarmodul in einer Vorderansicht dem ersten Begrenzungselement zugeneigt ist, wobei das erste Begrenzungselement so ausgebildet ist, dass wenigstens einige von dem ersten Solarmodul reflektierte Sonnenlichtstrahlen wenigstens zeitweise auf das erste Begrenzungselement auftreffen.

Der Begriff "Freiland" ist vorzugsweise nicht beschränkt auf den Raum außerhalb geschlossener Ortschaften. Der Ausdruck "Freiland" meint vorzugsweise jeglichen unüberdachten Raum, bei welchem das Erdreich bevorzugt bis zur Bodenoberfläche reicht.

Der Ausdruck "Vorderansicht" und der Ausdruck "Rückansicht" meinen vorzugsweise Ansichten, in welchen der Winkel α bestimmbar ist. Der Begriff "Vorderansicht" meint vorteilhafterweise diejenige Ansicht, in welcher der Winkel α bestimmbar ist und in welcher die Oberflächen beider Solarmodule dem Betrachter zugeneigt sind. Ist beispielsweise das erste Solarmodul nach Westen und das zweite Solarmodul nach Osten geneigt und sind beide Solarmodule gleichzeitig nach Süden geneigt, so entspricht der Blick von Süden nach Norden der Vorderansicht. Die Vorderansicht und die Rückansicht sind zueinander identisch, wenn das erste Solarmodul und das zweite Solarmodul keine gemeinsame Neigungsrichtung (z. B. nach Süden) aufweisen. Der Begriff "Längsrichtung" meint vorzugsweise jene Richtung, in welcher sich eine bzw. die Kante des ersten Solarmoduls ihrer Länge nach erstreckt, welche Kante dem zweiten Solarmodul zugewandt ist und welche vorzugsweise den Mittelbereich ihrer Länge nach definiert bzw. mitdefiniert.

Der Ausdruck "wobei das erste Solarmodul in einer Vorderansicht dem ersten Begrenzungselement zugeneigt ist" meint vorzugsweise, dass das erste Solarmodul so ausgerichtet ist, dass von der Oberfläche des ersten Solarmoduls reflektierte Lichtstrahlen auf das erste Begrenzungselement fallen können. Besonders vorzugsweise handelt es sich im Falle der Lichtstrahlen um Sonnenlichtstrahlen, welche bevorzugt allenfalls von der Atmosphäre der Erde in ihrer Bahn vor dem Auftreffen auf dem ersten Solarmodul beeinflusst werden. Bevorzugt ist damit kein künstliches, von Menschen erschaffenes Licht bzw. kein von diesem auf das erste Solarmodul umgelenktes Sonnenlicht gemeint.

Das Wort "Begrenzungselement" meint bevorzugt in Höhenrichtung errichtete Elemente, auf welche die Lichtstrahlen bzw. Sonnenlichtstrahlen des ersten Solarmoduls auftreffen können. Das erste Begrenzungselement mag beispielsweise eine Mauer, ein Zaun, ein Erdwall, eine Sichtschutzwand oder ein Sichtschutzzaun, eine lichtabsorbierende oder streuende Folie, ein Sichtschutzblech oder ein Solarmodul sein. Das Begrenzungselement ist vorzugsweise eine optische Begrenzung von Sonnenlichtstrahlen, welche von dem ersten Solarmodul reflektiert werden. Dabei sind grundsätzlich streuende, reflektierende und/oder absorbierende Materialien für die Begrenzung geeignet.

Es wurde gefunden, dass die aufsteigend aufeinander zulaufenden Solarmodule beispielsweise in Form eines Satteldachs oder eines versetzten Pultdachs zu einer verbesserten Wirtschaftlichkeit der Photovoltaikanlage führen. Diese Konstruktion ermöglicht es, das eine Solarmodul nach Osten und das andere Solarmodul nach Westen auszurichten. Damit ist eines der beiden Solarmodule am Vormittag ertragreich, während dies für das andere Solarmodul am Nachmittag gilt. Mittags sind beide Solarmodule gleichermaßen mäßig ergiebig. Dies führt zu einer Vergleichmäßigung der Stromerzeugung über den Tag hinweg, sodass der Strom wesentlich bedarfsgerechter zur Verfügung gestellt wird.

Darüber hinaus liegt der Erfindung die Erkenntnis zugrunde, dass insbesondere am Rande von Autobahnen viele Flächen weder forst- noch landwirtschaftlich noch auf eine sonst sinnvolle Weise genutzt werden. Diese in der Regel als Wiesen ausgestalteten Flächen, beispielsweise an Wällen, zwischen den Fahrtrichtungen oder an Autobahnkreuzen, bedürfen des Rückschnitts und verursachen somit lediglich Aufwand, ohne dabei irgendeinen Ertrag abzuwerfen.

Weiterhin wurde gefunden, dass gerade an diesen Flächen die Gefahr durch Blendungen recht groß ist, sodass Gegenmaßnahmen getroffen werden müssen. Die Erfindung ist ferner von der Erkenntnis getragen, dass die bisherigen Gegenmaßnahmen zu kostspielig sind und die Photovoltaikanlagen unwirtschaftlich werden lassen.

Der Erfindung liegt außerdem die Erkenntnis zugrunde, dass die Blendwirkung insbesondere bei satteldachartig konstruierten Photovoltaikanlagen besonders groß ist. Trifft beispielsweise das Vormittagslicht auf die Photovoltaikanlage, so mag das Sonnenlicht in einem relativ spitzen Winkel auf das nach Osten geneigte Solarmodul auftreffen, wodurch der davon reflektierte Lichtanteil unproblematischerweise nach oben abgelenkt wird. Allerdings kann es leicht passieren, dass das Vormittagslicht dann in einem flachen Winkel auf das nach Westen geneigte Solarmodul trifft, wodurch der davon reflektierte Lichtanteil die Photovoltaikanlage waagerecht oder leicht nach unten gerichtet in westlicher Richtung verlässt.

Aus diesen Gründen existieren Solarmodule mit Antireflexionsbeschichtungen. Es wurde allerdings gefunden, dass diese Beschichtungen bei einer tief stehenden Sonne bzw. relativ flachen Einfallswinkeln deutlich mehr Licht reflektieren als bei einer hoch stehenden Sonne. Im Falle der satteldachartigen Konstruktion der Photovoltaikanlage aber sind es v.a. flache Einfallswinkel, die die Probleme verursachen.

Ebenso gibt es Solarmodule mit aufgerauten bzw. zick-zack-förmigen Silizium-Oberflächen, welche ebenfalls die Spiegelwirkung stark verringern. Es wurde jedoch gefunden, dass selbst die kombinierte Anwendung von Antireflexionsbeschichtung und texturierter Siliziumoberfläche immer noch starke Blendungen zulassen, die Unfälle provozieren.

Weiterhin liegt der Erfindung die Erkenntnis zugrunde, dass mittels Blendgutachten einschließlich der Simulation der reflektierten Lichtstrahlen zu allen Tages- und Jahreszeiten Blendungen vermieden werden können, indem die Ausrichtung der Oberflächen der Solarmodule von vornherein auf diesen Zweck abstellt. Es wurde jedoch gefunden, dass diese Maßnahme zu viele Einschränkungen bzw. Kompromisse mit sich bringt. Derartige Einschränkungen bestehen in der Regel darin, dass auf die optimale Ausrichtung der Solarmodule zur Sonne hin verzichtet wird, was oft in Unwirtschaftlichkeit bzw. unbefriedigenden Lichtausbeuten resultiert.

Es ist schließlich eine zentrale Erkenntnis der Erfindung, dass mit Hilfe von erfindungsgemäßen Begrenzungselementen unerwünschte Lichtreflexionen zielgerichtet und vor allem auf wirtschaftliche Weise verhindert werden, ohne dass dabei nennenswerte Kompromisse eingegangen oder aufwendige Bauten vorgenommen werden müssen. Hierdurch werden die genannten Flächen am Rande von Siedlungen, Straßen, Flughäfen, Bahnstrecken, Autobahnen und dergleichen für eine wirtschaftliche, photovoltaische Nutzung erschlossen und die eingangs genannte Aufgabe gelöst.

Zweckmäßigerweise umfassen das erste Solarmodul und/oder das zweite Solarmodul jeweils eine Mehrzahl an Solarzellen und jeweils einen, die Mehrzahl an Solarzellen einfassenden Rahmen. Der Rahmen mag aus Metall, beispielsweise aus Aluminium oder Stahlblech, bestehen. Das Stahlblech mag einen rostfreien Stahl aufweisen, kann aber auch verzinkt sein. Die Solarzellen sind vorzugsweise Dickschicht-Solarzellen, können aber auch Dünnschicht-Solarzellen sein.

Mit Vorteil umfasst die Photovoltaikanlage ein zweites Begrenzungselement, wobei das zweite Begrenzungselement in der Draufsicht eine Begrenzung der Photovoltaikanlage in wenigstens einer Himmelsrichtung darstellt. Vorzugsweise sind in einer Vorderansicht zwischen dem zweiten Solarmodul und dem zweiten Begrenzungselement keine anderen Solarmodule befindlich. Der Ausdruck "andere Solarmodule" meint vorzugsweise erste bzw. zweite bzw. weitere bzw. zusätzliche Solarmodule. Es ist sehr bevorzugt, dass das zweite Solarmodul in einer Vorderansicht dem zweiten Begrenzungselement zugeneigt ist. Vorteilhafterweise ist das zweite Begrenzungselement so ausgebildet, dass wenigstens einige von dem zweiten Solarmodul reflektierte Sonnenlichtstrahlen wenigstens zeitweise auf das zweite Begrenzungselement auftreffen.

Es ist sehr bevorzugt, dass das erste Begrenzungselement wenigstens mittelbar mit dem ersten Solarmodul verbunden ist. Hierdurch wird der Aufbau der Photovoltaikanlage vereinfacht, sodass die Errichtung eines separaten baulichen Elements, etwa eine von Grund auf errichtete Sichtschutzwand, nicht erforderlich ist. Der Ausdruck "mittelbar mit dem ersten Solarmodul verbunden" meint vorzugsweise, dass das erste Begrenzungselement mit dem ersten Solarmodul über ein bauliches Zwischenelement oder mehrere bauliche Zwischenelemente verbunden ist. Der Begriff "bauliches Zwischenelement" meint beispielsweise einen Querträger, einen Längsträger, eine Schraubverbindung, einen Winkel, ein Stützelement, eine Strebe, einen Schenkel, eine Verankerung und/oder dergleichen. Das Wort "Zwischenelement" schließt vorzugsweise das Erdreich und/oder Fundamentmasse wie Beton, Zement oder Steinplatten aus. Besonders vorzugsweise nimmt die Verankerung wenigstens teilweise die Gewichtskraft des ersten Solarmoduls und wenigstens teilweise die Gewichtskraft des ersten Begrenzungselements auf. Es liegt insbesondere im Rahmen der Erfindung, dass dem ersten Begrenzungselement keine eigene Verankerung zugeordnet ist. Die Aufständerung umfasst bevorzugt den ersten Schenkel und/oder die Verankerung und/oder einen/den Längsträger und/oder einen/den Querträger und/oder eine/die Querstrebe und/oder einen/den zweiten Schenkel und/oder einen/den inneren/äußeren Modulständer und/oder ein/das Verbindungselement. Es ist ganz besonders bevorzugt, dass die Verankerung bzw. der erste Schenkel das erste Solarmodul und das erste Begrenzungselement trägt/tragen. Die Verankerung und der erste Schenkel sind vorzugsweise Bestandteile einer zusammenhängenden Aufständerung der Photovoltaikanlage. Es ist sehr bevorzugt, dass das erste Solarmodul und das erste Begrenzungselement auf der Aufständerung angeordnet sind. Zweckmäßigerweise sind das zweite Solarmodul und das zweite Begrenzungselement auf der zusammenhängenden Aufständerung angeordnet.

Gemäß einer besonders bevorzugten Ausführungsform umfasst das erste Begrenzungselement wenigstens ein weiteres Solarmodul und vorzugsweise wenigstens zwei bzw. drei weitere Solarmodule, wobei das wenigstens eine weitere Solarmodul in einer Vorderansicht vorzugsweise in Richtung des ersten Solarmoduls geneigt ist. Dies erlaubt eine besonders wirtschaftliche Nutzung der zur Verfügung stehenden Fläche. Es ist bevorzugt, dass die wenigstens zwei weiteren Solarmodule aufeinander in Längsrichtung folgen. Vorteilhafterweise ist das weitere Solarmodul in einer Vorderansicht abweichend von der Waagerechten in Richtung des ersten Solarmoduls geneigt. Bevorzugt laufen das erste Solarmodul und das weitere Solarmodul in einer Vorderansicht jeweils absteigend aufeinander zu und bilden dort zwischen sich einen Zwischenbereich. Vorzugsweise schließen die Oberseiten des ersten Solarmoduls und des weiteren Solarmoduls in einer Vorderansicht zwischen sich einen Winkel β ein, wobei der Winkel β vorzugsweise kleiner als 180° und größer als 60° ist. Vorzugsweise ist der Winkel β kleiner als 175° und weiter vorzugsweise kleiner als 170°. Der Winkel β ist zweckmäßigerweise größer als 90° bzw. 120° bzw. 150°. Es ist zweckmäßig, dass der Winkel β dem Winkel α entspricht. Es ist von Vorteil, wenn die Ausrichtung und/oder die Beschaffenheit des weiteren Solarmoduls identisch zu dem zweiten Solarmodul ist, sodass sich vorzugsweise das weitere Solarmodul und das zweite Solarmodul in einer Draufsicht hinsichtlich der Position und bevorzugt lediglich hinsichtlich der Position unterscheiden. Insbesondere ist bevorzugt, dass sich das weitere Solarmodul in derselben Höhe wie das erste Solarmodul erstreckt.

Es ist sehr bevorzugt, wenn das zweite Begrenzungselement wenigstens ein zusätzliches Solarmodul und vorzugsweise wenigstens zwei bzw. drei zusätzliche Solarmodule umfasst, wobei das wenigstens zusätzliche Solarmodul in einer Vorderansicht vorzugsweise in Richtung des zweiten Solarmoduls geneigt ist. Vorteilhafterweise trifft wenigstens eines der vorgenannten Merkmale des weiteren Solarmoduls auch auf das zusätzliche Solarmodul zu.

Gemäß einer Ausführungsform umfasst das erste Begrenzungselement, vorzugsweise anstelle des weiteren Solarmoduls, eine Sichtschutzblende. Hierdurch wird eine besonders sichere Vermeidung der Blendwirkung erzielt. Die Sichtschutzblende ist beispielsweise als Sichtschutzblech oder Sichtschutzfolie ausgestaltet. Vorteilhafterweise ist eine flache Stirnseite der Sichtschutzblende in einer Vorderansicht der Photovoltaikanlage zu sehen. Es ist zweckmäßig, dass sich die Sichtschutzblende in einer Höhenrichtung erstreckt, sodass wenigstens einige von dem ersten Solarmodul reflektierte Sonnenlichtstrahlen auf die Sichtschutzblende auftreffen. Zweckmäßigerweise ist die Sichtschutzblende in einer Vorderansicht senkrecht ausgerichtet. Es ist vorteilhaft, dass das erste Begrenzungselement bzw. die Sichtschutzblende wenigstens abschnittsweise in einer Längsrichtung wenigstens teilweise und bevorzugt vollständig oberhalb des ersten Schenkels und/oder des zweiten Schenkels angeordnet ist. Vorzugsweise ist in der Längsrichtung ein dem ersten Schenkel zugeordneter Abschnitt der Sichtschutzblende vollständig oberhalb des ersten Schenkels befindlich. Zweckmäßigerweise ist ein dem zweiten Schenkel in einer Längsrichtung zugeordneter Abschnitt der Sichtschutzblende wenigstens teilweise oberhalb und vorzugsweise vollständig oberhalb des zweiten Schenkels befindlich. Es ist möglich, dass die Sichtschutzblende eine spiegelnde Oberfläche aufweist, welche wenigstens einige von dem ersten Solarmodul reflektierte Sonnenlichtstrahlen auf das erste Solarmodul zurückreflektiert.

Es ist von besonders großem Vorteil, wenn eines der Solarmodule des wenigstens einen ersten Solarmoduls und des wenigstens einen zweiten Solarmoduls in einer östlichen Richtung und das andere dieser beiden Solarmodule in einer westlichen Richtung geneigt ist, wobei bevorzugt ist, dass der Mittelbereich in einer südlichen Richtung geneigt ist. Eine Ost-West-Ausrichtung bietet den Vorteil der Vergleichmäßigung der Stromerzeugung, während die bevorzugte Ausrichtung nach Süden die Ausbeute optimiert. Der Ausdruck "in einer östlichen Richtung" meint bevorzugt auch die Richtungen Südost, Nordost, Nordnordost, Ostnordost, Ostsüdost, Südsüdost und weiter bevorzugt den von den Himmelsrichtungen Nordost und Südost aufgespannten Winkelbereich. Die Ausdrücke "in westlicher Richtung" bzw. "in südlicher Richtung" sind zweckmäßigerweise analog zu verstehen. Vorteilhafterweise beläuft sich der Winkel α auf wenigstens 90° bzw. 120° bzw. 150°. Es ist bevorzugt, dass sich der Winkel α auf höchstens 175° bzw. 170° beläuft. Gemäß einer sehr bevorzugten Ausführungsform bilden das erste Solarmodul und das zweite Solarmodul die Form eines Satteldachs, sodass der Mittelbereich ein Firstbereich ist. Es ist möglich, dass das erste Solarmodul und das zweite Solarmodul die Form eines versetzten Pultdaches bilden.

Es ist sehr bevorzugt, dass eine in Längsrichtung ausgerichtete Oberkante des ersten Begrenzungselements wenigstens abschnittsweise höher ist als eine in Längsrichtung ausgerichtete Unterkante des ersten Solarmoduls und bevorzugt wenigstens abschnittsweise wenigstens so hoch ist wie eine in Längsrichtung ausgerichtete Oberkante des ersten Solarmoduls und noch weiter bevorzugt höher ist als die in Längsrichtung ausgerichtete Oberkante des ersten Solarmoduls. Der Begriff "Oberkante" meint bevorzugt die höchste, in Längsrichtung verlaufende Kante des ersten Solarmoduls bzw. des zweiten Solarmoduls. Der Ausdruck "Unterkante" ist bevorzugt analog zu verstehen. Vorteilhafterweise ist die in Längsrichtung ausgerichtete Unterkante des ersten Solarmoduls wenigstens 60 cm, vorzugsweise wenigstens 70 cm bzw. 100 cm bzw. 150 cm oberhalb des Erdreichs angeordnet. Je höher bei konstanter Neigung des ersten Solarmoduls eine in Längsrichtung ausgerichtete Unterkante des ersten Solarmoduls bzw. das erste Solarmodul selbst ist, desto weniger muss das erste Begrenzungselement das erste Solarmodul überragen. Umgekehrt können tief gelegene Solarmodule durch entsprechend hoch ausgestaltete Begrenzungselemente die aus der Photovoltaikanlage austretenden Lichtstrahlen kompensieren. Dabei muss das erste Begrenzungselement umso weniger hoch ausgebildet sein, je näher es an dem ersten Solarmodul angeordnet ist, weil dann die von dem ersten Solarmodul reflektierten Sonnenlichtstrahlen in einem umso steileren Winkel die Photovoltaikanlage verlassen. Vorzugsweise ist das erste Begrenzungselement in einer Draufsicht von dem ersten Solarmodul höchstens 5 m bzw. 2 m bzw. 1 m bzw. 0,5 m bzw. 0,2 m entfernt. Zweckmäßigerweise trifft wenigstens eines der vorgenannten Merkmale in analoger Weise auch auf das zweite Begrenzungselement bzw. das zweite Solarmodul zu.

Gemäß einer besonders bevorzugten Ausführungsform weist die Verankerung wenigstens zwei bzw. drei bzw. vier Ankerelemente auf, wobei die Ankerelemente bevorzugt als Erdspieße ausgebildet sind, wobei die Ankerelemente weiter bevorzugt in unterschiedliche Richtungen in das Erdreich eintreibbar bzw. eingetrieben sind. Hierdurch wird eine besonders stabile Verankerung erreicht. Die Ankerelemente können als Rohre oder als länglich massive Elemente oder als geschlitzte Profile ausgebildet sein. Der umlaufende Querschnitt der Ankerelemente mag eine kreisförmige, eine ovale, eine dreieckige, eine viereckige oder eine mehreckige Gestalt aufweisen. Es ist bevorzugt, dass die Ankerelemente im Querschnitt rohrförmig und insbesondere kreisrohrförmig ausgestaltet sind. Die Ankerelemente mögen einen Außendurchmesser von wenigstens 2,0 cm, vorzugsweise von wenigstens 2,2 cm und besonders vorzugsweise von wenigstens 2,5 cm aufweisen. Der Außendurchmesser der Erdspieße beträgt vorzugsweise höchstens 6 cm bzw. 5 cm bzw. 4 cm. Vorteilhafterweise beträgt eine Wandstärke des als Rohr ausgebildeten Ankerelements wenigstens 1,2 mm bzw. 1,5 mm bzw. 1,7 mm. Zweckmäßigerweise beläuft sich die Wandstärke des als Rohr ausgebildeten Ankerelements auf höchstens 4,0 mm bzw. 3,5 mm bzw. 3,0 mm. Es ist besonders bevorzugt, dass der Querschnitt der Erdspieße über wenigstens 50 bzw. 70 bzw. 90 bzw. 96 bzw. 99 % der Länge der Erdspieße konstant ist. Es liegt im Rahmen der Erfindung, dass die Ankerelemente wenigstens 40 cm bzw. 50 cm bzw. 60 cm bzw. 70 cm lang sind. Die Ankerelemente sind vorteilhafterweise höchstens 150 cm bzw. 120 cm bzw. 100 cm bzw. 90 cm lang. Ein Einschlusswinkel δ in einer Seitenansicht oder in einer Vorderansicht zwischen einer Längsachse eines Ankerelements und einer Längsachse des ersten Schenkels bzw. der Vertikalen mag vorzugsweise wenigstens 5° bzw. 10° bzw. 15° betragen. Vorzugsweise beläuft sich der Einschlusswinkel δ auf höchstens 70°/65°/60°. Die schräge Ausrichtung der Ankerelemente ermöglicht eine besonders widerstandsfeste Verankerung. Es ist sehr bevorzugt, dass die Verankerung wenigstens drei und weiter vorzugsweise wenigstens vier Ankerelemente aufweist.

Es ist ganz besonders bevorzugt, dass die Verankerung einen Fuß umfasst. Zweckmäßigerweise ist der Fuß in einem unteren Bereich des ersten Schenkels am ersten Schenkel befestigt. Durch die separate Ausbildung von Fuß und Schenkel ist es möglich, zunächst lediglich die Verankerung im Erdreich herzustellen. Erst im Anschluss daran werden die Schenkel an den Verankerungen montiert, was die Montage erleichtert. Es ist bevorzugt, dass der Fuß höchstens 20 cm, vorzugsweise höchstens 10 cm und weiter vorzugsweise höchstens 5 cm und besonders vorzugsweise höchstens 2 cm in das Erdreich hineinragt. Gemäß einer ganz besonders bevorzugten Ausführungsform liegt der Fuß mit seinem unteren Ende auf dem Erdreich auf. Es ist sehr bevorzugt, dass der Fuß eine solche Aufstellfläche aufweist, welche ein Umkippen des Fußes - ohne die Verwendung von Hilfsmitteln - verhindert. Es ist von großem Vorteil, wenn der erste Schenkel und der Fuß in Höhenrichtung bzw. in Richtung der Schenkelachse ineinandergeschoben sind. Vorteilhafterweise umschließt der erste Schenkel den Fuß. Wenn der erste Schenkel den Fuß umschließt, so wird die Verbindung von dem ersten Schenkel und dem Fuß vor Korrosion geschützt, weil dann der Spalt zwischen dem ersten Schenkel und dem Fuß nicht nach oben hin offen ist, sodass auch kein Wasser über diesen Weg in den Spalt eindringen kann. Es liegt insbesondere im Rahmen der Erfindung, das der erste Schenkel und/oder der Fuß ein Profil mit wenigstens drei und vorzugsweise mit wenigstens vier und besonders vorzugsweise mit genau vier Biegekanten umfasst. Gemäß einer sehr bevorzugten Ausführungsform weist der erste Schenkel und/oder der Fuß ein C-förmiges oder hohlrechteckförmiges Profil auf. Dann ergibt sich in der Ebene des Querschnitts vorzugsweise in alle Richtungen ein Formschluss, sodass der Fuß in den ersten Schenkel oder der erste Schenkel in den Fuß geschoben werden kann und nur ein Freiheitsgrad in axialer Richtung vorliegt. Das Vorliegen des lediglich einen Freiheitsgrades in axialer Richtung trägt zur Stabilität der Verbindung vom Fuß mit dem ersten Schenkel bei. Es ist sehr bevorzugt, dass der Fuß und der erste Schenkel zueinander komplementär ausgestaltete Profilelemente sind, sodass der Fuß und der erste Schenkel ineinandergeschoben werden können und vorzugsweise lediglich einen Freiheitsgrad in axialer Richtung aufweisen. Es ist auch möglich, dass der Fuß und/oder der erste Schenkel als Kantrohr, insbesondere als Vierkantrohr oder als - insbesondere gekantete - U-Profile ausgestaltet sind. Zweckmäßigerweise umfasst der Fuß eine Befestigungsvorrichtung, welche vorteilhafterweise als Lochreihe ausgestaltet ist. Mit Vorteil umfasst der erste Schenkel eine Fixierungsvorrichtung, welche vorzugsweise als Lochreihe ausgestaltet ist. Es ist sehr bevorzugt, dass die Befestigungsvorrichtung des Fußes und die Fixierungsvorrichtung des ersten Schenkels eine Nonius-Verbindung bilden. Die Nonius-Verbindung wird vorteilhafterweise über Fixierungsmittel in Form von Schrauben fixiert. Beispielsweise beträgt der Mittenabstand der Löcher des Fußes 20 mm, während der Mittenabstand der Löcher des ersten Schenkels 18 mm beträgt. Dies erlaubt ein Raster an möglichen Höhenpositionen des ersten Schenkels mit einer Auflösung von 2 mm.

Gemäß einer ganz besonders bevorzugten Ausführungsform weist die Verankerung wenigstens zwei bzw. drei bzw. vier Hülsen auf, wobei die Hülsen relativ zu einer Schenkelachse in einer Seitenansicht oder in einer Vorderansicht vorzugsweise schräg ausgerichtet sind. Die Hülsen dienen bevorzugt als Führung der Ankerelemente und geben die Richtung vor, in welche das jeweilige Ankerelement in das Erdreich zu treiben ist. Die Hülsen können insbesondere als Rohre bzw. als geschlitzte Rohre ausgestaltet sein. Es ist bevorzugt, dass der Fuß die wenigstens zwei Hülsen aufweist. Zweckmäßigerweise sind die wenigstens zwei Hülsen an dem Fuß befestigt und vorzugsweise mit dem Fuß verschweißt. Es ist bevorzugt, dass jede der Hülsen beidenends ein offenes Stirnende aufweist, wobei vorzugsweise eine Hülsenachse als Mittenachse die beiden Stirnenden der jeweiligen Hülse miteinander verbindet. Zweckmäßigerweise sind die Hülsenachsen in einer Seitenansicht bzw. in einer Vorderansicht schräg zur Schenkelachse angeordnet. Mit Vorteil verlaufen die wenigstens zwei Hülsenachsen in unterschiedlichen Richtungen. Es ist von großem Vorteil, dass das untere Ende wenigstens einer der Hülsen mit einem unteren Ende des Fußes fluchtet. Hierdurch wird die Standfestigkeit maximiert. Vorzugsweise ist ein unteres Stirnende der Hülse bzw. der Hülsen parallel zu einem unteren Stirnende des Fußes. Es ist sehr bevorzugt, dass das untere Stirnende der Hülse bzw. der Hülsen in der Ebene des unteren Stirnendes des Fußes liegt. Vorzugsweise weicht die Ebene des unteren Stirnendes der Hülse von der Ebene eines Querschnitts der Hülse ab und ist bevorzugt das Ergebnis eines Sägeschrittes schräg zur Hülsenachse. Es ist besonders bevorzugt, dass jede der Hülsen mit Blick auf die ihr zugeordnete Außenseite des Fußes von rechts oben nach links unten oder jede der Hülsen von links oben nach rechts unten verläuft. Es ist sehr bevorzugt, dass an wenigstens zwei bzw. drei bzw. vier Außenseiten und vorzugsweise an allen Außenseiten des Fußes jeweils eine Hülse angeordnet ist.

Es ist von Vorteil, dass ein oberes Ende des Ankerelements höchstens 5 cm bzw. 2 cm bzw. 1 cm oberhalb des oberen Endes der jeweils zugeordneten Hülse befindlich ist. Hierdurch wird das jeweilige Ankerelement insbesondere vor Diebstahl in der dazugehörigen Hülse gesichert. Gemäß einer ganz besonders bevorzugten Ausführungsform befindet sich das obere Ende des Ankerelements vollständig unterhalb des oberen Endes der zugeordneten Hülse bzw. vollständig innerhalb der Hülse. Es ist von Vorteil, wenn eine Außenseite des Ankerelements bzw. der Ankerelemente im Querschnitt komplementär ausgebildet ist zu einer Innenseite der jeweiligen Hülse.

Es ist besonders vorteilhaft, wenn die wenigstens zwei Ankerelemente in einer Draufsicht mit ihrer jeweiligen Spitze in unterschiedliche Richtungen zeigen. Vorzugsweise schließen die Ankerelemente in einer Draufsicht zwischen einander Inklusionswinkel ein, wobei die Inklusionswinkel voneinander um nicht mehr als Faktor 5 bzw. 3 bzw. 2 bzw. 1,5 abweichen. Ein Faktor 3 liegt beispielsweise vor, wenn im Falle von vier Ankerelementen zwei Inklusionswinkel 90° betragen, während ein dritter sich auf 45° und ein vierter sich auf 135° beläuft (135/45 = 3). Eine möglichst gleichmäßige Verteilung der Richtungen der Ankerelemente in der Draufsicht sorgt für eine hohe Stabilität der Verankerung.

Es ist von Vorteil, wenn die Photovoltaikanlage wenigstens einen sich seiner Länge nach in Querrichtung erstreckenden Querträger umfasst, wobei der Querträger das erste Solarmodul und das zweite Solarmodul wenigstens mittelbar trägt, wobei der Querträger in einer Vorderansicht wenigstens entlang der Ausdehnung des ersten Solarmoduls und/oder des zweiten Solarmoduls in Querrichtung bevorzugt waagerecht verläuft. Vorteilhafterweise umfasst die Photovoltaikanlage wenigstens zwei Querträger, wobei die Querträger eine Auflagefläche für das erste und/oder das zweite Solarmodul bzw. für einen inneren Modulständer und/oder einen äußeren Modulständer bilden. Vorteilhafterweise umfasst die Photovoltaikanlage bei n ersten, in Längsrichtung aufeinanderfolgenden Solarmodulen n+1 Querträger. Vorzugsweise stützen die Querträger die Solarmodule an in Querrichtung verlaufenden Seiten bzw. Kanten der Solarmodule. Es ist bevorzugt, dass die von den Querträgern definierte Auflagefläche in südlicher Richtung geneigt ist.

Zweckmäßigerweise umfasst die Photovoltaikanlage wenigstens einen sich seiner Länge nach in Längsrichtung erstreckenden Längsträger zum Tragen der Solarmodule, wobei der Längsträger in einer Seitenansicht vorzugsweise schräg verläuft. Bevorzugt bestimmt der wenigstens eine Längsträger in einer Seitenansicht relativ zu einer Waagerechten einen Winkel γ, wobei der Winkel γ vorzugsweise eine Neigung in südlicher Richtung bestimmt. Es ist bevorzugt, dass der Längsträger von dem ersten Schenkel getragen wird. Weiter vorzugsweise wird der Längsträger von einem zweiten Schenkel getragen. Es ist sehr bevorzugt, dass der zweite Schenkel kürzer ist als der erste Schenkel, wodurch der Winkel γ definiert wird. Es ist von Vorteil, wenn die Photovoltaikanlage mehrere Längsträger aufweist, welche zusammen eine Auflageebene für den wenigstens einen Querträger bzw. die Mehrzahl an Querträgern definiert.

Es ist bevorzugt, dass der wenigstens eine Querträger bzw. die mehreren Querträger hinsichtlich des Kraftflusses zwischen den Solarmodulen und dem wenigstens einen Längsträger bzw. den mehreren Längsträgern angeordnet ist/sind. Hierdurch können Modulständer auf den Querträgern anstelle auf den Längsträgern befestigt werden, was die Verwendung von besonders einfach herzustellenden Modulständern erlaubt. Modulständer auf Längsträgern müssten zugleich auf die Oberfläche der Längsträger und die dazu geneigte Unterseite der Solarmodule angepasst sein, was jedoch ein umständliches Unterfangen wäre. Vorteilhafterweise ist der wenigstens eine Längsträger bzw. sind die mehreren Längsträger in einer statischen Hinsicht bzw. in Hinsicht eines Kraftflusses zwischen dem wenigstens einen Querträger bzw. den mehreren Querträgern und dem ersten Schenkel bzw. dem ersten und dem zweiten Schenkel angeordnet. Der Ausdruck "zwischen einander hinsichtlich eines Kraftflusses" meint beispielsweise den Fall, dass eine von dem Wind erzeugte Kraft auf die Solarmodule einwirkt, von wo aus die Kraft über die Modulständer bzw. die Querträger in die Längsträger geleitet wird, welche die Kraft ihrerseits in den ersten Schenkel und/oder den zweiten Schenkel und/oder in eine Querstrebe einleiten, von wo aus die Kraft schließlich an der Verankerung bzw. den Verankerungen angreift, um schlussendlich in das Erdreich geleitet zu werden. Hinsichtlich der Kraftflüsse folgen die verschiedenen Elemente aufeinander, woraus sich der Begriff "zwischen" erklärt. Es ist möglich, dass die Photovoltaikanlage wenigstens eine Querstrebe aufweist, welche vorteilhafterweise den ersten Schenkel und/oder den zweiten Schenkel mit dem Längsträger verbindet. Zweckmäßigerweise bilden der Längsträger, der erste Schenkel bzw. der zweite Schenkel und die Querstrebe in einer Seitenansicht ein Dreieck.

Gemäß einer bevorzugten Ausführungsform umfasst die Photovoltaikanlage wenigstens einen inneren Modulständer, wobei der innere Modulständer sich in Höhenrichtung erstreckt, das erste Solarmodul und/oder das zweite Solarmodul im Mittelbereich abstützt und so den Winkel α bestimmt bzw. mitbestimmt. Der innere Modulständer kann beispielsweise an dem Querträger oder an dem Längsträger, vorzugsweise an dem Querträger, befestigt sein. Hierdurch wird der Aufbau der Unterkonstruktion besonders effektiv gestaltet. Es ist bevorzugt, dass der innere Modulständer zwei erste Solarmodule und/oder zwei zweite Solarmodule abstützt. Ein dem inneren Modulständer gegenüberliegendes Ende des ersten Solarmoduls und/oder des zweiten Solarmoduls ist vorzugsweise über ein Verbindungselement mit dem Querträger bzw. Längsträger verbunden. Das Verbindungselement weist zweckmäßigerweise eine geringere Höhenausdehnung als der innere Modulständer auf. Es ist bevorzugt, dass der innere Modulständer in einer Vorderansicht im Wesentlichen U-förmig ausgebildet ist und eine U-Basis sowie zwei U-Schenkel aufweist. Vorzugsweise ist die U-Basis des inneren Modulständers auf dem Querträger bzw. Längsträger, beispielsweise per Schraubverbindung, befestigt. Vorzugsweise erstrecken sich die U-Schenkel des inneren Modulständers ihrer Länge nach in die Höhe. Es ist möglich, dass die U-Schenkel des inneren Modulständers an ihren oberen Enden umgebogen sind und so eine Stützfläche für die Solarmodule aufweisen.

Die Photovoltaikanlage umfasst mit Vorteil einen äußeren Modulständer, welcher das weitere Solarmodul bzw. das zusätzliche Solarmodul abstützt. Der äußere Modulständer kann beispielsweise als halbe U-Form ausgestaltet sein und eine halbe U-Basis sowie lediglich einen U-Schenkel aufweisen. Der U-Schenkel des äußeren Modulständers ist vorzugsweise identisch zu demjenigen des inneren Modulständers. Der innere Modulständer und/oder der äußere Modulständer ist vorzugsweise aus Stahlblech gefertigt und umfasst einen nicht rostenden Stahl oder einen verzinkten Stahl.

Der erste Schenkel und/oder der zweite Schenkel und/oder der Fuß und/oder die Querstrebe und/oder der Längsträger und/oder der Querträger ist vorzugsweise aus Stahlblech gefertigt und umfasst zweckmäßigerweise einen nicht rostenden Stahl oder einen verzinkten Stahl. Der Fuß und/oder der erste Schenkel und/oder der zweite Schenkel und/oder die Querstrebe und/oder der Längsträger und/oder der Querträger ist bevorzugt über Biegekanten im Querschnitt U-förmig oder C-förmig ausgestaltet.

Die vorgenannte Aufgabe wird gelöst durch die Verwendung einer erfindungsgemäßen Photovoltaikanlage im Freiland und vorzugsweise angrenzend an baulichen Einrichtungen, weiter vorzugsweise angrenzend an einen Verkehrsweg und besonders vorzugsweise angrenzend an eine Autobahn. Unter dem Ausdruck "bauliche Einrichtungen" sind vorzugsweise Verkehrswege und/oder Gebäude zu verstehen. Mit dem Wort "Gebäude" sind insbesondere Siedlungen, aber auch Gewerbegebiete und insbesondere Gebäude der Verkehrsinfrastruktur gemeint. Bei den Gebäuden der Verkehrsinfrastruktur mag es sich insbesondere um Terminals von Flughäfen oder Bahnhöfe handeln. Der Begriff "Verkehrsweg" meint vorzugsweise Straßen aller Art, aber beispielsweise auch Flugschneisen von Flughäfen. Mit dem Begriff "Straßen" sind vorzugsweise asphaltierte Straßen gemeint, wobei der Ausdruck "asphaltierte Straßen" insbesondere Autobahnen umfasst. Es ist bevorzugt, dass ein unterster Abschnitt einer Unterkante bzw. einer untersten Kante des ersten Solarmoduls und/oder des zweiten Solarmoduls wenigstens 1,5 m und vorzugsweise wenigstens 2,0 m oberhalb desjenigen Abschnitts des Verkehrsweges befindlich ist, welcher in einer Draufsicht von einem von einem Solarmodul reflektierten Lichtstrahl überstrichen wird.

Nachfolgend wird die Erfindung anhand von sieben Figuren eines Ausführungsbeispiels erläutert. Es zeigen
- Fig. 1: eine Vorderansicht einer erfindungsgemäßen Photovoltaikanlage,
- Fig. 2: eine Seitenansicht der Photovoltaikanlage aus Fig. 1,
- Fig. 3: eine Ansicht von Solarmodulen der Photovoltaikanlage der Figuren 1 und 2, jedoch ohne Teile der Aufständerung, wobei die Blickrichtung parallel zu einer Längsrichtung (leicht nach Süden geneigt) verläuft,
- Fig. 4: eine vergrößerte perspektivische Ansicht der Solarmodule aus Fig. 3,
- Fig. 5: eine Verankerung der Photovoltaikanlage aus den Figuren 1 und 2 im Erdreich in einer Seitenansicht,
- Fig. 6: eine perspektivische Ansicht der Verankerung aus Fig. 5 und
- Fig. 7: einen Querschnitt der Verankerung aus den Figuren 5 und 6.

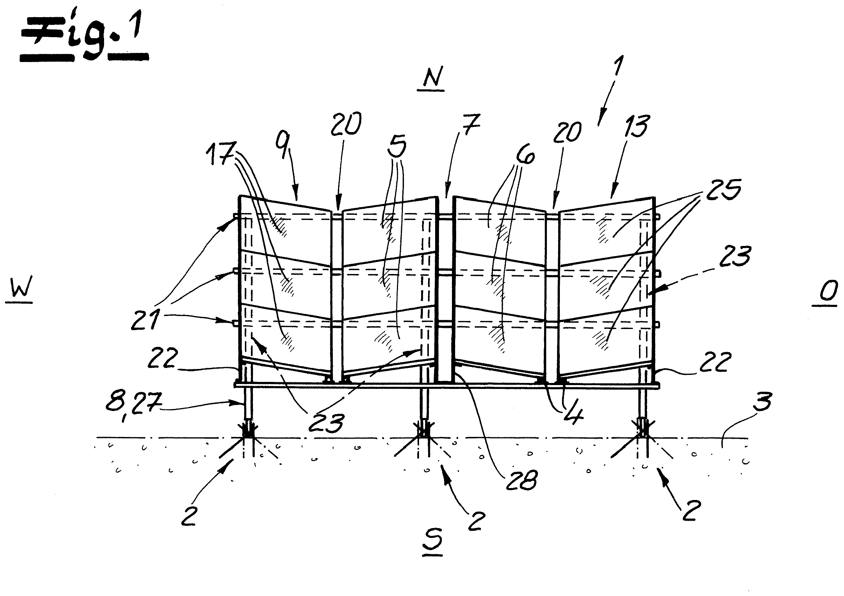

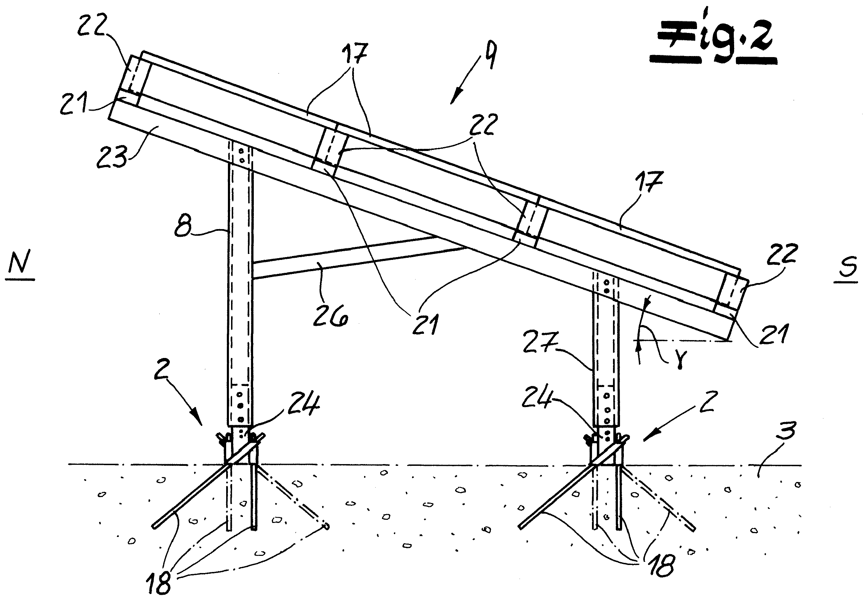

Fig. 1 stellt eine erfindungsgemäße Photovoltaikanlage 1 in einer Vorderansicht dar, welche erste Solarmodule 5 sowie zweite Solarmodule 6 umfasst. Die ersten Solarmodule 5 und die zweiten Solarmodule 6 laufen aufeinander in jeweils aufsteigender Richtung zu, sodass sie gemeinsam vorzugsweise eine Art Satteldach bilden. Die ersten Solarmodule 5 und die zweiten Solarmodule 6 schließen zwischen sich einen Mittelbereich 7 ein. Der Fig. 1 sind außerdem die Himmelsrichtungen zu entnehmen, wonach die ersten Solarmodule 5 bevorzugt nach Westen W und die zweiten Solarmodule 6 bevorzugt nach Osten O geneigt sind. Aufgrund der Vorderansicht ist in Fig. 1 weniger gut erkennbar, dass der Mittelbereich 7 bevorzugt nach Süden S geneigt ist, was allerdings insbesondere in Fig. 2 deutlich wird.

Gemäß Fig. 1 weist die Photovoltaikanlage 1 ein erstes Begrenzungselement 9 mit beispielsweise drei weiteren Solarmodulen 17 auf. Die drei weiteren Solarmodule 17 besitzen in diesem Ausführungsbeispiel dieselbe Neigung wie die drei zweiten Solarmodule 6, sodass sie den drei ersten Solarmodulen 5 entgegen geneigt und nach Osten O gerichtet sind. Die Photovoltaikanlage 1 dieses Ausführungsbeispiels mag ein zweites Begrenzungselement 13 aufweisen, welches seinerseits beispielhafterweise drei zusätzliche Solarmodule 25 umfasst. Die drei zusätzlichen Solarmodule 25 mögen dieselbe Ausrichtung aufweisen wie die drei ersten Solarmodule 5, sodass sie den zweiten Solarmodulen 6 zugeneigt und nach Westen W gerichtet sind. Die ersten Solarmodule 5 folgen aufeinander vorzugsweise in Längsrichtung und weisen bevorzugt dieselbe Neigung auf. Vorteilhafterweise liegen die Oberflächen der ersten Solarmodule 5 in einer Ebene. Analog mag dies jeweils auch für die zweiten Solarmodule 6, die weiteren Solarmodule 17 und die zusätzlichen Solarmodule 25 gelten. Die weiteren Solarmodule 17 und die ersten Solarmodule 5 einerseits bzw. die zweiten Solarmodule 6 und die zusätzlichen Solarmodule 25 andererseits bilden zwischen sich jeweils einen Zwischenbereich 20, welcher vorzugsweise als ein Spalt in Längsrichtung ausgebildet ist. Der Spalt in Längsrichtung mag beispielsweise 20 cm betragen.

Steht beispielsweise die Sonne tief im Osten O, so kann es passieren, dass die Lichtstrahlen von den ersten Solarmodulen 5 in eine etwa waagerechte Richtung reflektiert werden. Diese besonders lästigen bzw. gefährlichen Lichtstrahlen treffen aber dann auf das Begrenzungselement 9 bzw. die drei weiteren Solarmodule 17. Von dort werden die Lichtstrahlen in aufsteigender Richtung reflektiert, sodass diese schon nach einigen Metern in westlicher Richtung so viel an Höhe gewonnen haben, dass sie für den Verkehr nicht mehr gefährlich werden können. Wenn hingegen die Sonne tief im Westen W steht, so sorgt das zweite Begrenzungselement 13 dafür, dass die Lichtstrahlen auch nach Osten O die Photovoltaikanlage 1 nicht mehr in einer im Wesentlichen waagerechten Richtung verlassen. Auf diese Weise wird zielgerichtet die Gefahr einer Blendung verhindert.

Das Ausführungsbeispiel der Fig. 1 umfasst vorzugsweise Querträger 21 sowie bevorzugt Längsträger 23, welche Bestandteil einer Unterkonstruktion bzw. Aufständerung für die Solarmodule 5, 6, 17, 25 sind. Die Querträger 21 und die Längsträger 23 mögen in der Vorderansicht nach Fig. 1 bzw. auch in einer Draufsicht ein Raster bilden, auf welchem sich die Solarmodule 5, 6, 17, 25 abstützen können. Die Längsträger 23 erstrecken sich zweckmäßigerweise ihrer Länge nach in der Längsrichtung, welche in diesem Ausführungsbeispiel der Nord-Süd-Richtung entspricht. Die Querträger dieses Ausführungsbeispiels erstrecken sich ihrer Länge nach bevorzugt in einer Querrichtung und damit in diesem Ausführungsbeispiel in einer West-Ost-Richtung.

In Fig. 2 ist der Aufbau der Unterkonstruktion aufgrund der Seitenansicht etwas besser zu erkennen. Demzufolge ist der Längsträger 23 in der Seitenansicht vorzugsweise schräg orientiert und sehr bevorzugt nach Süden S geneigt. Demnach ist ein Winkel γ zwischen einer Waagerechten und dem Längsträger 23 erkennbar, welcher die Neigung der Solarmodule 5, 6, 17, 25 Richtung Süden S bestimmt. Der Winkel γ ist bekanntermaßen standortabhängig, sodass Photovoltaikanlagen 1 in weiter nördlich gelegenen Regionen vorzugsweise stärker nach Süden S ausgerichtet sind und entsprechend größere Winkel γ aufweisen. In Mitteleuropa mag der Winkel γ beispielsweise 20° betragen. Zweckmäßigerweise trägt der Längsträger 23 seinerseits beispielsweise vier Querträger 21, auf welchen wiederum die weiteren Solarmodule 17 abgestützt sind. Die Fig. 2 gibt einen Blick auf die Unterseite der weiteren Solarmodule 17 frei, sodass insbesondere äußere Modulständer 22, welche von den Querträgern 21 getragen werden und für die Neigung der weiteren Solarmodule 17 verantwortlich sind, sichtbar sind.

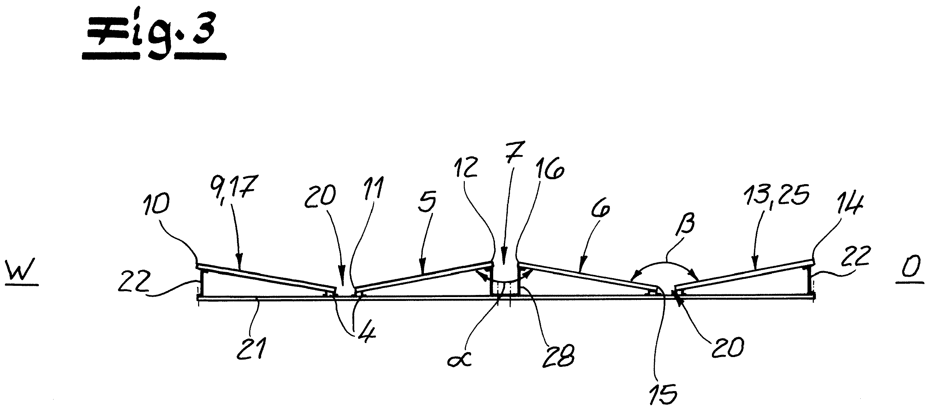

In Fig. 3 ist der Blick in Längsrichtung geneigt, wodurch der Aufbau des oberen Teils der Unterkonstruktion besonders deutlich wird. So werden die weiteren Solarmodule 17 und die zusätzlichen Solarmodule 25 bevorzugt von den äußeren Modulständern 22 getragen. Demgegenüber werden die ersten Solarmodule 5 und die zweiten Solarmodule 6 vorzugsweise gleichzeitig von inneren Modulständern 28 getragen. Der innere Modulständer 28 mag beispielsweise eine im Wesentlichen U-förmige Gestalt aufweisen. So kann der innere Modulständer 28 mit seiner U-Basis an dem ihm zugeordneten Querträger 21, beispielsweise per Schraubverbindung, befestigt sein. Die inneren Modulständer 28 können - wie auch die äußeren Modulständer 22 - an oberen Enden der Schenkel umgebogene Schenkelfüße aufweisen, welche als Auflage- bzw. Fixierpunkte für die Solarmodule 5, 6, 17, 25 dienen.

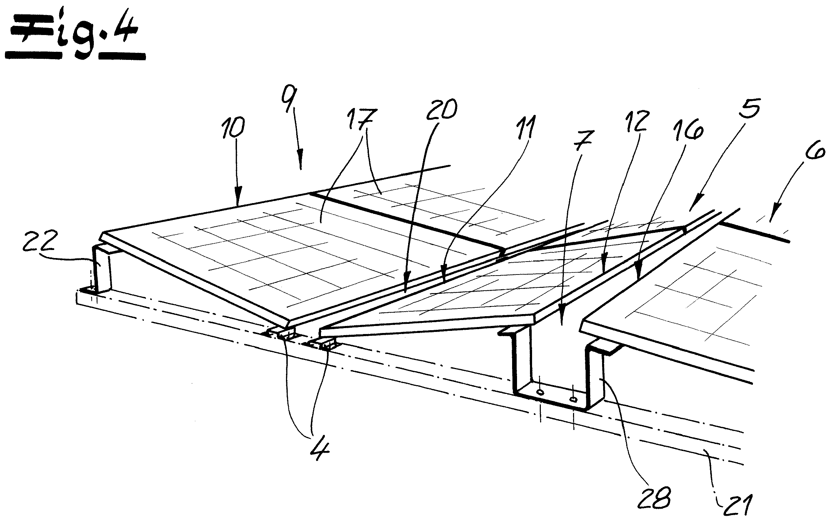

Fig. 4 zeigt eine vergrößerte perspektivische Ansicht von Fig. 3, aus welcher die Gestalt der Modulständer 22, 28 deutlicher hervorgeht. Verbindungselemente 4 verbinden die Unterkanten der Solarmodule 5, 17 vorzugsweise jeweils mit dem Querträger 21. Die Modulständer 22, 28 sind bevorzugt in der Längsrichtung so breit ausgebildet, dass die Photovoltaikanlage 1 in Längsrichtung über noch weitere Solarmodule 5, 6, 17 verlängert werden kann.

Das vorliegende Ausführungsbeispiel betrifft eine Photovoltaikanlage 1, welche innerhalb einer Schleife eines Autobahnkreuzes angeordnet ist, sodass eine Oberfläche des Erdreichs 3 sich etwa auf demselben Höhenniveau wie eine asphaltierte Oberfläche der Schleife des Autobahnkreuzes befindet. Vorzugsweise befindet sich eine Unterkante 11 der ersten Solarmodule 5 in Längsrichtung wenigstens in einer Höhe von 2 m oberhalb des Erdreichs 3. Die von den Begrenzungselementen 9, 13 reflektierten Lichtstrahlen verlaufen auch bei tiefstehender Sonne in wenigstens leicht aufsteigender Richtung, sodass bereits nach wenigen Metern die Lichtstrahlen eine Höhe von mehr als 2,5 m oder 3 m erreicht haben, wodurch beispielsweise auch LKW-Fahrer von den Lichtstrahlen nicht mehr betroffen sind.

In Fig. 3 ist erkennbar, dass die ersten Solarmodule 5 und die zweiten Solarmodule 6 dieses Ausführungsbeispiels mit ihren Unterseiten einen Winkel α einschließen. Der Winkel α dieses Ausführungsbeispiels mag 20° betragen, sodass die ersten Solarmodule 5 und die zweiten Solarmodule 6 jeweils relativ zu einer Waagerechten vorzugsweise einen Winkel von 10° einschließen. Ferner mögen die weiteren Solarmodule 17 bzw. die zusätzlichen Solarmodule 25 so ausgerichtet sein, dass sie einen Winkel β gemeinsam mit den Oberseiten der zweiten Solarmodule 6 bzw. ersten Solarmodule 5 einschließen. Vorteilhafterweise entspricht der Winkel β dem Winkel a, weil dann aufgrund der identischen Ausrichtung von den ersten Solarmodulen 5 und den zusätzlichen Solarmodulen 25 der Aufbau der Unterkonstruktion vereinfacht wird. Ebenso mögen die weiteren Solarmodule 17 identisch zu den zweiten Solarmodulen 6 ausgerichtet sein und insbesondere die gleiche Neigung nach Osten O aufweisen. Selbstverständlich aber können die Solarmodule 17 bzw. 25 auch stärker als die ersten Solarmodule 5 bzw. die zweiten Solarmodule 6 geneigt sein, wodurch die Photovoltaikanlage 1 entsprechend näher an Verkehrswegen stehen könnte.

Erfindungsgemäß ist das erste Begrenzungselement 9 in der Draufsicht eine Begrenzung der Photovoltaikanlage 1, sodass das erste Begrenzungselement 9 nach Westen hin den Abschluss der Photovoltaikanlage 1 bildet. Hierdurch werden die Lichtstrahlen einer tief im Osten O stehenden Sonne nicht in einer im Wesentlichen waagerechten Richtung nach Westen reflektiert. Umgekehrt gilt dies vorzugsweise für das zweite Begrenzungselement 13 analog. Vorzugsweise ist gemäß Fig. 3 eine Oberkante 10 des ersten Begrenzungselements 9 wenigstens abschnittsweise höher als eine Unterkante 11 der ersten Solarmodule 5. Es ist sehr bevorzugt, dass die Oberkante 10 des ersten Begrenzungselements 9 wenigstens abschnittsweise wenigstens so hoch ist wie eine Oberkante 12 der ersten Solarmodule 5 und weiter bevorzugt höher ist als die Oberkante 12 der ersten Solarmodule 5. Der Ausdruck "höher als" meint vorzugsweise nicht die gesamte Oberkante 10 des ersten Begrenzungselements 9 bzw. nicht die gesamte Oberkante 12 bzw. Unterkante 11 der ersten Solarmodule 5, sondern lediglich die an der Reflektierung eines einzigen Lichtstrahls beteiligten Abschnitte in Längsrichtung der ersten Solarmodule 5 einerseits und des ersten Begrenzungselements 9 andererseits. Zweckmäßigerweise besitzt das zweite Begrenzungselement 13 analog dieselbe Höhenposition wie das erste Begrenzungselement 9, sodass sich eine Oberkante 14 des zweiten Begrenzungselements 13 analog zu einer Unterkante 15 bzw. einer Oberkante 16 des zweiten Solarmoduls verhält.

In Fig. 2 ist dargestellt, dass die Photovoltaikanlage 1 dieses Ausführungsbeispiels einen ersten Schenkel 8 sowie einen zweiten Schenkel 27 aufweist, wobei der zweite Schenkel 27 vorzugsweise kürzer ist als der erste Schenkel 8. Die unterschiedlichen Längen des ersten Schenkels 8 und des zweiten Schenkels 27 definieren vorzugsweise die Neigung des Längsträgers 23 bzw. der Längsträger 23 nach Süden und damit auch den Winkel γ. Es ist möglich dass eine Querstrebe 26 bzw. mehrere Querstreben 26 jeweils den ersten Schenkel 8 und/oder den zweiten Schenkel 27 mit dem zugeordneten Längsträger 23 zwecks Stabilisierung nach Fachwerkart miteinander verbinden. Der erste Schenkel 8, der zweite Schenkel 27, die Querstrebe 26 sowie die Längsträger 23 und die Querträger 21 mögen allesamt aus gewalzten Stahlprofilen bestehen. Zwecks Witterungsbeständigkeit können diese Elemente 8, 27, 26, 23, 21 verzinkt sein. Die Elemente der Aufständerung 8, 27, 26, 23, 21 sind vorzugsweise als C-förmige oder U-förmige Profile ausgestaltet, wodurch ein geringes Gewicht bei einer gleichzeitig hohen Steifigkeit der Elemente 8, 27, 26, 23, 21 erreicht wird, ohne dabei die Herstellungskosten zu stark anwachsen zu lassen.

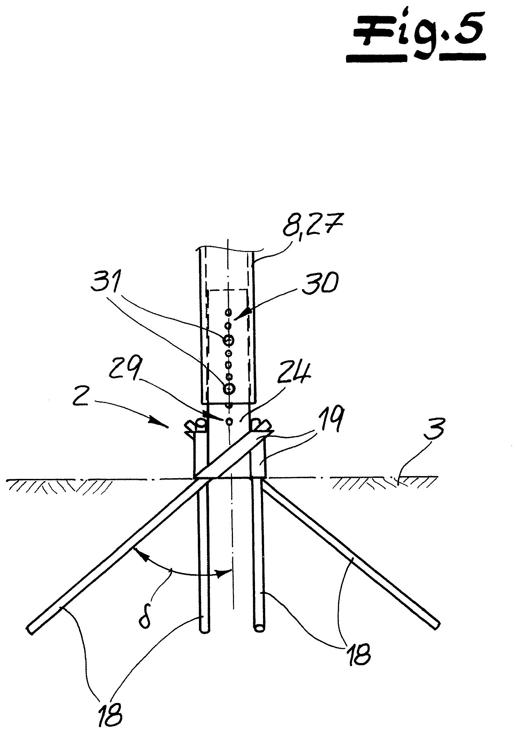

In Fig. 2 ist ferner zu erkennen, dass die Photovoltaikanlage eine Verankerung 2 für jeden Schenkel 8, 27 aufweist. Die Verankerung 2 dieses Ausführungsbeispiels umfasst einen Fuß 24, vier daran per Schweißung befestigte Hülsen 19 sowie jeweils vier Ankerelemente 18. Gemäß Fig. 5 ist in diesem Ausführungsbeispiel der erste Schenkel 8 auf den Fuß 24 von oben aufgeschoben, sodass der Fuß 24 von dem ersten Schenkel 8 zweckmäßigerweise formschlüssig umschlossen wird. Die Hülsen 19 sind vorzugsweise schräg gegenüber einer Schenkelachse bzw. gegenüber einer Vertikalen angeordnet, sodass diese einen Winkel δ relativ zu der Vertikalen einschließen. Der Fuß 24 ist vorzugsweise als U-Form oder als C-Form ausgestaltet und besitzt daher vorteilhafterweise vier Seiten. Jeder der vier Seiten ist zweckmäßigerweise eine der vier Hülsen 19 zugeordnet, sodass in einer Seitenansicht jeweils zwei der Hülsen 19 diametral in schräger Richtung auseinanderlaufen, während die beiden anderen Hülsen 19 zueinander parallel ausgerichtet sind. Es ist von Vorteil, dass die Hülsen 19 ein unteres Ende aufweisen, welches schräg geschnitten ist, sodass das jeweilige untere Ende einer Hülse 19 parallel zu einem unteren Stirnende des Fußes 24 bzw. zu einer Oberfläche des Erdreiches 3 verläuft. Auf diese Weise wird eine Aufstandsfläche des Fußes 24 durch die unteren Enden der Hülsen 19 vergrößert, sodass sich die Füße 24 leichter bzw. stabiler aufstellen lassen.

Gemäß Fig. 5 sind die Ankerelemente 18 als Erdspieße ausgebildet und durch die Hülsen 19 hindurch in das Erdreich 3 getrieben worden. Vorzugsweise ragen die Ankerelemente 18 so weit in das Erdreich 3 hinein, dass die Ankerelemente 18 nicht mehr über die Hülsen 19 nach oben hin hinaus stehen, wodurch ein Diebstahl bzw. Vandalismus erschwert wird. Die Ankerelemente 18 sind besonders bevorzugt als Rohre oder als massive Elemente ausgestaltet, welche einen im Wesentlichen komplementären Querschnitt zu den Hülsen 19 aufweisen. Die Ankerelemente 18 können etwa eine Länge von 75 cm aufweisen und beispielsweise einen Innendurchmesser von 25 mm bei einer Wandstärke von 2 mm besitzen, woraus sich ein Außendurchmesser von 29 mm in diesem Ausführungsbeispiel ergibt. Die dazugehörigen Hülsen 19 können z. B. einen Innendurchmesser von 30 mm aufweisen. Sowohl die Ankerelemente 18 als auch die Hülsen 19 können aus Edelstahl oder aus einem verzinkten Stahl bestehen.

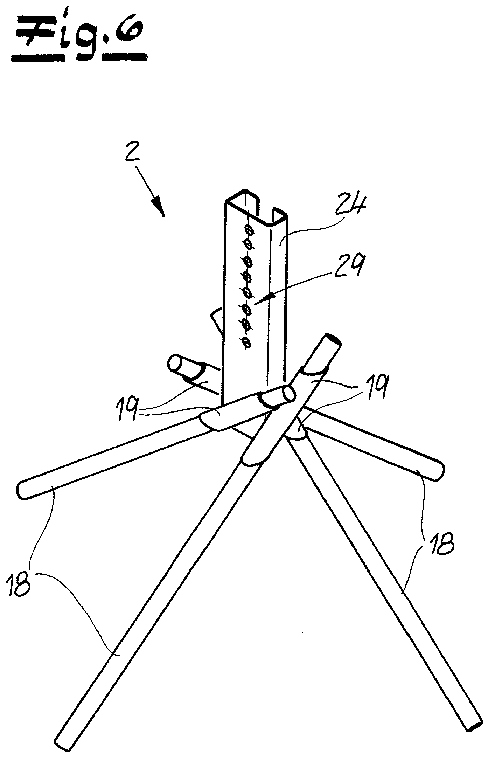

Die perspektivische Ansicht der Fig. 6 hebt die unterschiedlichen Ausrichtungen der Ankerelemente 18 bzw. Hülsen 19 hervor. Die gleichmäßige Winkelverteilung der Ankerelemente 18 erzeugt eine besonders große Stabilität im Erdreich, sodass sowohl große Zugkräfte als auch große Druckkräfte auf die Verankerung 2 einwirken können und von dieser abgefangen werden. Ebenso ist die Verankerung 2 stabil gegenüber jedweden Kräften, die eine Verkippung der Schenkel 8, 27 bewirken. Der Fig. 6 ist ferner zu entnehmen, dass der Fuß 24 vorzugsweise C-förmig ausgestaltet ist. Es ist bevorzugt, dass gegenüber des Spaltes der C-Form eine Befestigungsvorrichtung 29 in Form einer Lochreihe angeordnet ist. Die Löcher der Befestigungsvorrichtung 29 dieses Ausführungsbeispiels mögen 20 mm voneinander entfernt sein (Mittenabstand).

Die Schenkel 8, 27 weisen bevorzugt eine Fixierungsvorrichtung 30 in Form einer Lochreihe auf. Die Löcher der Fixierungsvorrichtung 30 dieses Ausführungsbeispiels mögen lediglich 18 mm voneinander entfernt sein (Mittenabstand). Folglich sind die Befestigungsvorrichtung 29 und die Fixierungsvorrichtung 30 zueinander in einem Nonius-Verhältnis von 10:9 zueinander ausgestaltet. Damit können stets jeweils zwei miteinander korrespondierende Löcher der Befestigungsvorrichtung 29 einerseits und der Fixierungsvorrichtung 30 andererseits gefunden werden, welche über Fixierungsmittel 31 in Form von zwei Schrauben miteinander verbunden werden können. Die Nonius-Verbindung der Befestigungsvorrichtung 29 und der Fixierungsvorrichtung 30 dieses Ausführungsbeispiels erlaubt eine Höheneinstellung des ersten Schenkels 8 mit einer Auflösung von 2 mm.

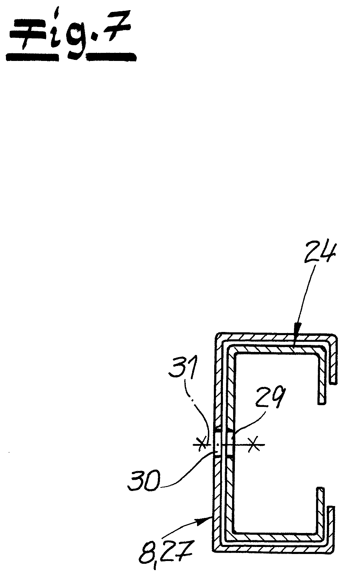

Der Querschnitt des Fußes 24 und des ersten Schenkels 8 ist schließlich in Fig. 7 abgebildet, wobei zwecks besserer Erkennbarkeit der Spalt zwischen dem Fuß 24 und dem ersten Schenkel 8 vergrößert dargestellt ist. Der Querschnitt zeigt zwei miteinander korrespondierende Löcher der Befestigungsvorrichtung 29 und der Fixierungsvorrichtung 30, welche mit einem Fixierungsmittel 31, etwa in Form einer Schraube, verbunden werden können. Der Fig. 7 ist außerdem zu entnehmen, dass der erste Schenkel 8 bevorzugt auf den Fuß 24 aufgeschoben wird. Hierdurch wird aufgrund der vorzugsweisen C-Förmigkeit des ersten Schenkels 8 lediglich der Freiheitsgrad in Höhenrichtung zugelassen, was zu einer stabilen Verbindung zwischen dem ersten Schenkel 8 und dem Fuß 24 beiträgt.

### Bezugszeichenliste:

| | | | |
|---|---|---|---|
| 1 | Photovoltaikanlage | 27 | zweiter Schenkel |
| 2 | Verankerung | 28 | innerer Modulständer |
| 3 | Erdreich | 29 | Befestigungsvorrichtung |
| 4 | Verbindungselement | 30 | Fixierungsvorrichtung |
| 5 | erstes Solarmodul | 31 | Fixierungsmittel |
| 6 | zweites Solarmodul | | |
| 7 | Mittelbereich | | |
| 8 | erster Schenkel | | |
| 9 | erstes Begrenzungselement | | |
| 10 | Oberkante von 9 | | |
| 11 | Unterkante von 5 | | |
| 12 | Oberkante von 5 | | |
| 13 | zweites Begrenzungselement | | |
| 14 | Oberkante von 13 | | |
| 15 | Unterkante von 6 | | |
| 16 | Oberkante von 6 | | |
| 17 | weiteres Solarmodul | | |
| 18 | Ankerelement | | |
| 19 | Hülse | | |
| 20 | Zwischenbereich | | |
| 21 | Querträger | | |
| 22 | äußerer Modulständer | | |
| 23 | Längsträger | | |
| 24 | Fuß | | |
| 25 | zusätzliches Solarmodul | | |
| 26 | Querstrebe | | |

## Patentansprüche

1. Photovoltaikanlage (1) zur Errichtung im Freiland, umfassend wenigstens eine Verankerung (2) zur Befestigung der Photovoltaikanlage (1) im Erdreich (3), wobei die Verankerung (2) wenigstens ein Ankerelement (18) umfasst, wobei das Ankerelement (18) für ein Eintreiben in das Erdreich (3) ausgebildet ist und eine Länge von wenigstens 20 cm aufweist,
wobei die Photovoltaikanlage (1) ein erstes Solarmodul (5) und ein zweites Solarmodul (6) aufweist, wobei die Solarmodule (5, 6) in einer Vorderansicht jeweils aufsteigend aufeinander zulaufen und dort zwischen sich einen Mittelbereich (7) bilden, wobei der Mittelbereich (7) sich in einer Draufsicht in einer Längsrichtung erstreckt und eine dazu quer verlaufende Querrichtung definiert, wobei die Unterseiten der beiden Solarmodule (5, 6) zwischen sich einen Winkel α einschließen, wobei der Winkel α kleiner ist als 180° und größer ist als 60°, wobei die Photovoltaikanlage (1) wenigstens einen ersten Schenkel (8) aufweist, wobei der erste Schenkel (8) die Verankerung (2) mit dem ersten Solarmodul (5) und/oder dem zweiten Solarmodul (6) verbindet,
wobei die Photovoltaikanlage (1) ein erstes Begrenzungselement (9) aufweist, wobei das erste Begrenzungselement (9) in der Draufsicht eine Begrenzung der Photovoltaikanlage (1) in wenigstens einer Himmelsrichtung darstellt, wobei in einer Vorderansicht zwischen dem ersten Solarmodul (5) und dem ersten Begrenzungselement (9) keine anderen Solarmodule befindlich sind,
**dadurch gekennzeichnet, dass**
das erste Solarmodul (5) in einer Vorderansicht dem ersten Begrenzungselement (9) zugeneigt ist, wobei das erste Begrenzungselement (9) so ausgebildet ist, dass wenigstens einige von dem ersten Solarmodul (5) reflektierte Sonnenlichtstrahlen wenigstens zeitweise auf das erste Begrenzungselement (9) auftreffen.

2. Photovoltaikanlage (1) nach Anspruch 1, wobei das erste Begrenzungselement (9) wenigstens mittelbar mit dem ersten Solarmodul (5) verbunden ist.

3. Photovoltaikanlage (1) nach einem der Ansprüche 1 oder 2, wobei das erste Begrenzungselement (9) wenigstens ein weiteres Solarmodul (17) umfasst, wobei das weitere Solarmodul (17) in einer Vorderansicht vorzugsweise in Richtung des ersten Solarmoduls (5) geneigt ist.

4. Photovoltaikanlage (1) nach einem der Ansprüche 1 bis 3, wobei eines der beiden Solarmodule (5, 6) in einer östlichen Richtung und das andere der beiden Solarmodule (6, 5) in einer westlichen Richtung geneigt ist, wobei bevorzugt ist, dass der Mittelbereich (7) in einer südlichen Richtung geneigt ist.

5. Photovoltaikanlage (1) nach einem der Ansprüche 1 bis 4, wobei eine in Längsrichtung ausgerichtete Oberkante (10) des ersten Begrenzungselements (9) wenigstens abschnittsweise höher ist als eine in Längsrichtung ausgerichtete Unterkante (11) des ersten Solarmoduls (5).

6. Photovoltaikanlage (1) nach einem der Ansprüche 1 bis 5, wobei die Verankerung (2) wenigstens zwei Ankerelemente (18) aufweist, wobei die Ankerelemente (18) bevorzugt als Erdspieße ausgebildet sind, wobei die Ankerelemente (18) vorzugsweise in unterschiedliche Richtungen in das Erdreich (3) eintreibbar bzw. eingetrieben sind.

7. Photovoltaikanlage (1) nach einem der Ansprüche 1 bis 5, wobei die Verankerung (2) wenigstens zwei Hülsen (19) aufweist, wobei die Hülsen (19) relativ zu einer Schenkelachse in einer Seitenansicht oder in einer Vorderansicht vorzugsweise schräg ausgerichtet sind.

8. Photovoltaikanlage (1) nach einem der Ansprüche 1 bis 7, wobei die Photovoltaikanlage (1) wenigstens einen sich seiner Länge nach in Querrichtung erstreckenden Querträger (21) umfasst, wobei der Querträger (21) das erste Solarmodul (5) und das zweite Solarmodul (6) wenigstens mittelbar trägt, wobei der Querträger (21) in einer Vorderansicht wenigstens entlang der Ausdehnung des ersten Solarmoduls (5) und/oder des zweiten Solarmoduls (6) in Querrichtung waagerecht verläuft.

9. Photovoltaikanlage (1) nach einem der Ansprüche 1 bis 8, wobei die Photovoltaikanlage (1) wenigstens einen inneren Modulständer (28) aufweist, wobei der innere Modulständer (28) sich in Höhenrichtung erstreckt, das erste Solarmodul (5) und/oder das zweite Solarmodul (6) im Mittelbereich (7) abstützt und so den Winkel α bestimmt bzw. mitbestimmt.

10. Verwendung einer Photovoltaikanlage (1) nach einem der Ansprüche 1 bis 9 im Freiland und vorzugsweise angrenzend an baulichen Einrichtungen, weiter vorzugsweise angrenzend an einem Verkehrsweg und besonders vorzugsweise angrenzend an einer Autobahn.
